# EUROPEAN PATENT APPLICATION

(11) **EP 1 055 718 A1**
(43) Date of publication of application: **29.11.2000**
(21) Application number: 99959755.2
(22) Date of filing: 10.12.1999
(51) Int. Cl.: C09K 3/00, C09K 3/18, G02B 1/10, B32B 9/00, C03C 17/30, C07F 7/16

(54) **OPTICAL ARTICLE, METHOD FOR PREPARING OPTICAL ARTICLE AND ORGANIC SILICON COMPOUND**

(30) Priority: 10.12.1998 JP 35125398; 12.05.1999 JP 13102599
(71) Applicant: TORAY INDUSTRIES, INC., Tokyo 103-8666 (JP)
(72) Inventor: KONDOU, Satoshi, Ibaraki-shi Osaka 567-0031 (JP); OKA, Koichiro, Ibaraki-shi Osaka 567-0034 (JP)
(74) Representative: Coleiro, Raymond
(86) International application number: JP9906948
(87) International publication number: WO0034408

(57) **Abstract**

The objective of the present invention lies in offering optical articles to which contaminants do not readily adhere and from which contaminants are readily removed.

The objective of the present invention is realized by means of optical articles characterized in that they have an organosilicon compound layer at the surface, and the contact angle of artificial fingerprint liquid at said surface is at least 60E and, furthermore, the sliding angle of the artificial fingerprint liquid is no more than 30E. Again, the objective of the invention is realized by a method of producing optical articles characterized in that, in a method in which an organosilicon compound is evaporated within a vacuum tank and coated onto the surface of an optical article, said organosilicon compound is subjected beforehand to polycondensation. Furthermore, the objective of the present invention is realized by means of specified organosilicon compounds.

The optical articles of the present invention can be favourably used for various types of display image screens, various types of display device display screens, optical filters, spectacle lenses, optical lenses, lighting appliances, exhibition cases or display windows, picture mounts, window glass and other such optical articles, or optical articles which are used attached thereto.

## Description

### Technical Field

The present invention relates to optical articles like the image screens and display screens of displays and display devices such as CRTs (cathode-ray tubes), LCDs (liquid crystal displays), PDPs (plasma display panels), and EL (electroluminescence), optical filters, spectacle lenses, optical lenses, lighting appliances, exhibition cases or display windows, picture mounts, window glass and the like, or optical articles employed attached thereto.

When optical articles employed as the screens of display devices and the like are in use, contamination readily occurs due to fingerprints, pens, cosmetics and perspiration, etc, and, once produced, such contamination is difficult to remove. Because transparency and reflecting properties are impaired when contamination occurs, attempts have been made to improve the contamination resistance by forming water-repellent/ oil-repellent coated films on the surface of the optical articles. As a method for forming such water-repellent/oil-repellent films, there is known the method, as described in JP-A-2-22372 for example, where an organosilicon compound possessing perfluoroalkyl groups is dissolved in a solvent and then coated onto a substrate to form the water-repellent/oil-repellent film. However, although these films are outstanding in respect of water-repellency/oil-repellency, they are unsatisfactory in terms of their ease of contamination by fingerprints and fingerprint removal properties. Furthermore, the strength of the films themselves is low and there are problems in respect of durability, so they are inadequate for use on display screen surfaces.

Now, as methods for forming such organosilicon compound films on the surface of an optical article, there are known methods where a solution is employed (so-called wet coating methods) such as dip coating, spin coating, gravure coating, slit die coating and reverse coating.

On the other hand, in the case where methods which do not use solutions (so-called dry coating methods) such as vacuum deposition methods and sputtering methods are employed as the method for forming the organosilicon compound film on the surface of an optical article surface, the organosilicon compound film can be formed in the same equipment after providing the optical article with an anti-reflective film of an inorganic compound. However, generally speaking, the melting points, boiling points and sublimation points of organosilicon compounds are low and so heating control when performing vacuum evaporation thereof is difficult compared to the case of inorganic compounds. Furthermore, it is frequently the case that organosilicon compounds are high-viscosity liquid materials and so, as a result of local heating, the phenomenon of bumping (splashing) readily occurs. Such splashing or scattering on the optical article surface due to the bumping constitutes a defect and it is a major cause of decreases in yield.

To counter this, there have been proposed methods in JP-A-4-72055 and JP-A-6-340966 where a porous material is impregnated with the organosilicon compound, or the organosilicon compound made to adhere to a fibrous electroconductive material mass, after which vapour deposition is performed.

However, these methods have problems in that the impregnated amount or adhered amount tends to vary so that variations in the evaporated quantities of the organosilicon compound occur. Moreover, it is not economically advantageous to use and discard the porous material or fibrous electroconductive material mass. Furthermore, generally speaking, when coating is carried out with organosilicon compounds using vacuum deposition methods, the organosilicon compound is applied as a monomolecular layer, and so there is the problem that the film thickness, film density and film strength are limited.

### Disclosure of the Invention

The objective of the present invention is to resolve the aforesaid disadvantages of the prior art and provide optical articles to which contaminants do not readily adhere and from which such contaminants are readily removed.

The objective of the present invention is realized by optical articles which are characterized in that they have an organosilicon compound layer on the surface, and the contact angle of artificial fingerprint liquid at said surface is at least 60E and, furthermore, the sliding angle of the artificial fingerprint liquid is no more than 30E.

Furthermore, the objective of the present invention is realized by a method of producing optical articles characterized in that, in a method where an organosilicon compound is evaporated within a vacuum tank and coated onto the surface of the optical article, said organosilicon compound is subjected beforehand to polycondensation.

Furthermore, the objective of the present invention is realized by means of organosilicon compounds represented by the following general formula.

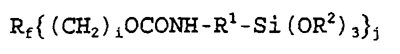

(In the formula, R_{f} is an organic group containing a fluorinated oxaalkyl group or a fluorinated alkyl group, i is an integer in the range from 1 to 4, R¹ is a bivalent organic group, R² is a monovalent organic group and j is an integer in the range from 1 to 4.)

### Brief Explanation of the Drawings

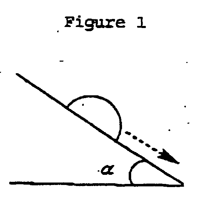

Figure 1 is a schematic drawing illustrating the method of measuring the sliding angle of the artificial fingerprint solution.

### Optimum Form for Practising the Invention

The optical articles which are the subject of the present invention are articles used as the image screens of displays such as CRTs, LCDs, PDPs and EL, and the display screens of various type of instrument. Alternatively, they are articles which are used affixed to these image screens and display screens. In addition, they include polarizing plates, optical filters, spectacle lenses, optical lenses, lighting appliances, exhibition cases or display windows, picture mounts, window glass and the like, or articles used attached to the surfaces thereof.

With regard to these optical articles, it is preferred that the organosilicon compound layer be coated on top of a transparent substrate. As transparent substrate materials there can be used resins such as acrylic resins, polycarbonate resins, polystyrene resins, polyurethane resins, poly(4-methylpentene-1) resin, diethylene glycol bis(allyl carbonate) resin, polyester resins and polyethersulfone resins, or glass and the like.

When the transparent substrate material is a resin, depending on the application thereof, abrasion resistance may be demanded. Provision of a hard coat layer on the surface is effective in raising the abrasion resistance of a resin substrate. The hard coat layer is usually provided by a wet coating method.

As the hard coat layer, there is generally used a coated film containing ultrafine particles of silicon dioxide, antimony oxide, selenium oxide, titanium oxide or other such metal compound, in an organic and/or inorganic binder. Furthermore, there can also be used coated films which do not contain ultrafine particles of a metal compound. As examples of organic binders, there are hardened epoxy resins and resins which have undergone radical crosslinking polymerization, etc, and as examples of inorganic binders there are hydrolysed and hardened silane compounds, etc.

A hard coat layer film thickness of the order of 0.5-10 ìm can give a balance between abrasion resistance and other properties (for example, crack resistance), and is preferred.

The optical articles of the present invention are characterized in that they have an organosilicon compound layer at the surface and, furthermore, the contact angle of artificial fingerprint solution at said surface is at least 60E. The artificial fingerprint solution is a liquid made to simulate fingerprint components and is prepared by dissolving 0.35 g of sodium chloride, 0.05 g of urea and 0.20 g of lactic acid in a mixture of 25 ml of water and 25 ml of ethanol. More preferred is an artificial fingerprint solution contact angle of at least 65E. When the artificial fingerprint solution contact angle lies in the aforementioned range, it becomes exceedingly difficult for fingerprints and other such contaminants to adhere to the optical article surface.

In the present invention, by furthermore making the sliding angle of the artificial fingerprint solution at the optical article surface no more than 30E, contaminant removal is facilitated. That is to say, even when fingerprints and other such contaminants adhere to the optical article surface, they can be readily wiped away.

In the present invention, in order to achieve a surface with good contaminant removal properties as aforementioned, it is preferred that the organosilicon compound provided at the optical article surface has undergone polycondensation. By raising the molecular weight of the organosilicon compound by means of polycondensation, the formation of thicker and denser coated films become possible, there is good adhesion to the substrate and good surface hardness, and coated films with outstanding contaminant removal properties are readily obtained.

The organosilicon compound prior to polycondensation is a compound containing silyl groups represented by -SiR_{y}X_{3-y} (where R is a monovalent organic group, X is a hydrolysable group and y is an integer in the range from 0 to 2). As examples of the hydrolysable group (X), there are alkoxy groups such as OCH₃ and OCH₂CH₃, acyloxy groups such as OCOCH₃, ketoxime groups such as ON=CR⁵R⁶, halogen groups such as Cl and Br, amino groups such as NR⁷R⁸ and the like (where R⁵, R⁶, R⁷ and R⁸ represent monovalent organic groups).

As specific examples of the silyl groups, there are -Si(OCH₃)₃, -Si(OCH₂CH₃)₃, -SiCH₃(OCH₃)₃, -SiPh(OCH₃)₂, -Si(OCOCH₃)₃, -Si(CH₃)(OCOCH₃)₂, -Si{ON=C(CH₃)C₂H₅}₃, -Si(NH₂)₃, -Si{N(CH₃)₂}₃, -SiCl₃, -Si(CH₃)Cl₂ and the like. From the point of view of polycondensation, it is preferred that the number of such silyl groups lies in the range from 2 to 4 per molecule.

Fluorinated organosilicon compounds which possess water-repellency/oil-repellency and have electrical insulation properties, mould release properties, solvent resistance, lubricity, heat resistance and antifoaming properties are preferred as the organosilicon compounds. Of these, comparatively large organosilicon compounds of molecular weight about 1,000-50,000, which have a perfluoroalkyl group or a perfluoropolyether group in the molecule, as denoted by the following organosilicon compounds I to VII, are extremely outstanding in their contamination resistance.

### 〈Organosilicon Compound I〉

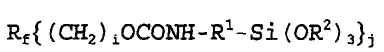

(In the formula, R_{f} is an organic group containing a fluorinated oxaalkyl group or a fluorinated alkyl group, i is an integer in the range from 1 to 4, R¹ is a bivalent organic group, R² is a monovalent organic group and j is an integer in the range from 1 to 4.)

Organosilicon compounds with an alkoxysilane structure at a terminal with an interposed carbamate bond, of the kind denoted by Organosilicon Compound I, can be readily obtained by reacting Compound A, which is represented by the following formula, with an isocyanate-containing silane compound.

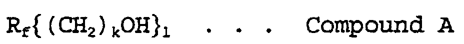

(In the formula, R_{f} is an organic group containing at least one group selected from fluorinated oxaalkyl groups, fluorinated alkyl groups, fluorinated oxaalkylene groups and fluorinated alkylene groups, k is an integer in the range from 1 to 4, and l is an integer in the range from 1 to 4.)

The following can be cited as specific examples of Compound A.

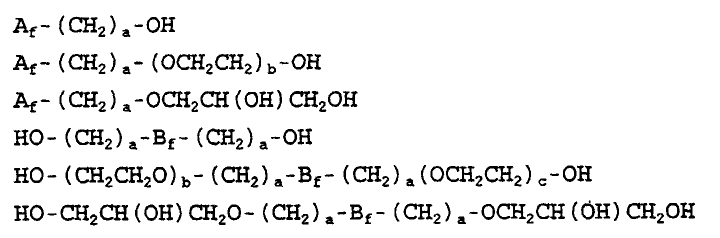

a is an integer in the range from 1 to 4, and b and c are integers in the range from 1 to 15. As examples of A_{f}, there are perfluoroalkyl groups represented by F(CF₂)ₙ (where n is an integer in the range from 2 to 12) or monovalent organic groups which include a perfluoropolyether group such as (CF₂CF₂CF₂O), (CF₂CF(CF₃)O), (CF₂CF₂O), (CF₂O) or (CF(CF₃)O). As examples of B_{f}, there are bivalent organic groups which include a perfluoroalkylene group represented by (CF₂)ₘ (where m is an integer in the range from 2 to 12) or a perfluoropolyether group such as (CF₂CF₂CF₂O), (CF₂CF(CF₃)O), (CF₂CF₂O), (CF₂O) or (CF(CF₃)O). In order to obtain higher contamination resistance, preferred structures for A_{f} and B_{f} include the latter perfluoropolyether groups, where the main chain has flexibility, the molecular weight is high and the fluorine content is high. Among these, when compounds are used which include an organic group in which the aforementioned fluorinated polyether groups are randomly distributed, high contamination resistance can be obtained due to the flexibility of the main chain. An organosilicon compound molecular weight in the range from 500 to 20,000 is preferred, with the range from 1,000 to 10,000 being more preferred. There is a tendency for the contamination resistance to be lowered when the molecular weight is less than 500, and for reactivity at the time of synthesis to be reduced when it exceeds 20,000.

As the isocyanate-containing silane employed for the synthesis of the organosilicon compound, it is possible to use a compound with the following structure.

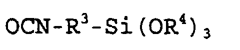

(R³ is a bivalent organic group and R⁴ is a monovalent organic group)

Generally speaking, functional group-containing fluorine compounds can be produced by various methods, and it is possible to obtain fluorinated organosilicon compounds simply by the production of a carbamate bond by the reaction between one or more than one aforesaid compound A and an aforesaid isocyanate-containing silane compound. Such a compound contains alkoxysilane groups in the molecule, so it is characterized by readily undergoing polycondensation and having good adhesion to the substrate.

The reaction can be carried out in the absence of solvent or in the presence of solvent. As the solvent, there can be used a polar solvent such as DMF or DMSO, or a fluorine-based solvent such as perfluorohexane, perfluorooctane or trifluoroxylene. The reaction temperature is preferably in the range from room temperature to around 200E. Furthermore, with the objective of increasing the reaction rate, etc. when carrying out this reaction there can be employed a metal catalyst such as CuCl, CuCl₂, CuI, CuCN, CuBr.SMe₂, dibutyltin laurate, dibutyltin acetate, tin(I) oleate or a manganese salt, and also a tertiary amine such as triethylamine or triethylenediamine.

### 〈Organosilicon Compound II〉

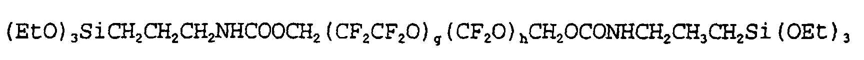

(In the formula, g and h denote integers in the range 1 to 100.)

### 〈Organosilicon Compound III〉

An organosilicon compound which is characterized in that it is the reaction product of an aforesaid compound A and a polyfunctional isocyanate plus an aminosilane or hydroxysilane or carboxysilane, with the compound A and the aminosilane or hydroxysilane or carboxysilane being linked via the polyfunctional isocyanate.

As compound A for the synthesis of organosilicon compound III, there can be used a compound identical to the compound A employed in the synthesis of organosilicon compound I. With regard to the alcoholic OH groups, it is preferred that there be from 2 to 4 per molecule, but when there are more than 3 alcoholic OH groups, there is a tendency for a large quantity of by-product to be produced at the time of the reaction with the bifunctional isocyanate and the aminosilane.

As examples of the polyfunctional isocyanate employed for the synthesis of organosilicon compound III, there are tolylene diisocyanate, diphenylmethane diisocyanate, xylylene diisocyanate, isophorone diisocyanate, hexamethylene diisocyanate and the like. In order to reduce the production of by-products as far as possible, a bifunctional isocyanate is preferred. Of these, tolylene diisocyanate is preferred in that its molecular weight is low, and purification and separation of by-products after the reaction is easy.

Examples of the aminosilane are compounds having at least one amino group and at least one hydrolysable silane group such as a chlorosilane group, alkoxysilane group or aminosilane group. Specific examples are 4-aminobutyltriethoxysilane, n-(2-aminoethyl)-3-aminopropyltrimethoxysilane, aminophenyltrimethoxysilane, 3-aminopropyltriethoxysilane and the like.

Again, as examples of the hydroxysilane, there are compounds having at least one hydroxy group and at least one hydrolysable silane group such as a chlorosilane group, alkoxysilane group or aminosilane group. Specific example are hydroxymethyltriethoxysilane, condensed oligomers thereof, and the like.

As examples of the carboxysilane, there are compounds having at least one carboxy group and at least one hydrolysable silane group such as a chlorosilane group, alkoxysilane group or aminosilane group. Specific example are carboxymethyltriethoxysilane and the like.

With regard to the aforesaid silanes, in terms of polycondensation, trifunctional types tend to raise the film strength at the time of coating, so are preferred.

In the above, the aminosilane, hydroxysilane and carboxysilane can be used as mixtures.

Organosilicon compound III is a compound in which compound A and the aminosilane or hydroxysilane or carboxysilane are linked via the polyfunctional isocyanate. The organosilicon compound may be synthesized by firstly reacting compound A and the polyfunctional isocyanate to synthesize a terminal isocyanate compound, and then reacting the aminosilane or hydroxysilane or carboxysilane with this terminal isocyanate compound, or by the method of firstly reacting the polyfunctional isocyanate and the aminosilane or hydroxysilane or carboxysilane to synthesize a compound which has a terminal isocyanate group on one side and then performing reaction of this with compound A.

Since a polyfunctional isocyanate is used, whichever of the aforesaid synthetic processes is adopted, oligomer or polymer tends to be formed as by-product. Thus, it is preferred that in each synthesis stage, purification such as distillation be carried out where required and separation of the target compound performed.

The aforesaid formation of a carbamate bond by the reaction of an isocyanate group with an alcoholic OH group or a carboxyl group, and the formation of a urethane bond by the reaction between an isocyanate group and an amino group, can be carried out in the absence of solvent or presence of solvent. As the solvent, there can be used a solvent such as N,N-dimethylformamide (DMF), dimethylsulphoxide (DMSO) or other such polar solvent or perfluorohexane, perfluorooctane, trifluoroxylene or other such fluorine-based solvent, and the reaction can be carried out under homogeneous conditions or heterogeneous conditions. The reaction temperature preferably lies in the range from room temperature to about 200E. Again, with the objective of raising the reaction rate, etc, when forming the carbamate bond, there can be used a metal catalyst such as CuCl, CuCl₂, CuI, CuCN, CuBr.SMe₂, dibutyltin laurate, dibutyltin acetate, tin(I) oleate or manganese salt.

### 〈Organosilicon Compound IV〉

An organosilicon compound which is the reaction product of compound B, of formula given below, and a polyfunctional amine plus an isocyanatosilane or epoxysilane, with the compound B and the isocyanatosilane or epoxysilane being linked via the polyfunctional amine.

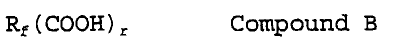

(In the formula, R_{f} is an organic group containing one or more group selected from fluorinated oxaalkyl groups, fluorinated alkyl groups, fluorinated oxaalkylene groups and fluorinated alkylene groups, and r is an integer in the range 1 to 4.)

Specific examples of the aforesaid compound B used when synthesizing organosilicon compound IV are as follows.

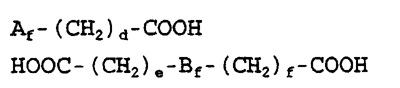

In the formulae, d is an integer in the range 0 to 4, and e and f are integers in the range 1 to 15. A_{f} is a monovalent organic group containing one or more perfluoroalkylene represented by F(CF₂)ₙ (where n is an integer in the range 2 to 12) or perfluoropolyether group selected from (CF₂CF₂CF₂O), (CF₂CF(CF₃)O), (CF₂CF₂O), (CF₂O) and (CF(CF₃)O). B_{f} is a perfluoroalkylene represented by (CF₂)ₙ (where n is an integer in the range 2 to 12) or a bivalent organic group containing one or more perfluoropolyether group selected from (CF₂CF₂CF₂O), (CF₂CF(CF₃)O), (CF₂CF₂O), (CF₂O) and (CF(CF₃)O.

In order to obtain even greater contamination resistance, a structure of A_{f} and B_{f} is preferred containing the latter perfluoropolyether groups, where the main chain has flexibility, the molecular weight is high and the fluorine content is high. In particular, when there is used a compound containing an organic group in which the aforesaid fluorinated polyether groups are randomly distributed, high contamination resistance is obtained due to the main chain flexibility.

Still more specific examples of compound B of the present invention are as follows.

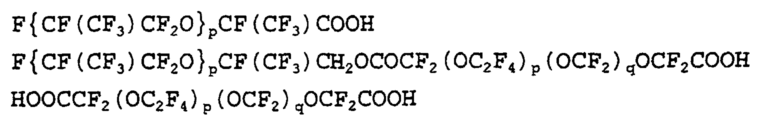

In the formulae, p and q are at least 1, and are preferably integers in the range 2 to 200.

With regard to the carboxyl groups of compound B, from 2 to 4 per molecule is preferred but if there are more than 3 carboxyl groups there is a tendency for a large quantity of by-product to be produced when forming the amide bonds by the reaction of compound B and the polyfunctional amine.

The molecular weight of compound B is preferably at least 500 but no more than 20,000, and more preferably at least 1,000 and no more than 15,000. If the molecular weight is less than 500, the contamination resistance is lowered, while if it exceeds 20,000 the film strength of the coated film tends to be lowered and the reactivity is reduced at the time of synthesis.

As examples of the polyfunctional amine used to synthesize organosilicon compound IV, there are aliphatic, alicyclic and aromatic compounds with at least two amino groups. Specific examples are ethylenediamine, diethylenetriamine, triethylenetetraamine, diaminobenzene and the like.

Organosilicon compound IV is a compound wherein compound B and an isocyanatosilane or epoxysilane are linked via a polyfunctional amine. It is possible to synthesize the compound of the present invention either by reacting compound B and the polyfunctional amine beforehand to synthesize a terminal amine compound, and then performing reaction between the isocyanatosilane or epoxysilane and the terminal amino groups, or by the method of reacting the polyfunctional amine and isocyanatosilane or epoxysilane beforehand to form a single-side terminal amine compound, after which this is reacted with compound B.

With regard to the reaction of the carboxyl and amino groups, methods using a condensing agent such as dicyclohexylcarbodiimide or diisopropylcarbodiimide are generally well known.

The following are examples of the reaction product of compound B and a polyfunctional amine obtained by such a method.

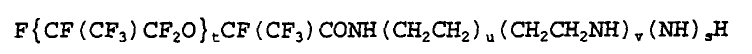

(In the formula, t is at least 1 and preferably an integer in the range 2 to 120. u is 0 or an integer in the range 1 to 10. v is 0 or an integer in the range 1 to 6. s is 0 or 1. One or other of u and v is 0, and if u is 0 then s is 0, while if v is 0 then s is 1.)

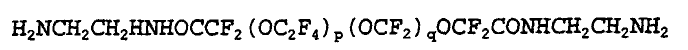

(In the formula, p and q are at least 1, and preferably an integer in the range 2 to 200.)

As examples of the isocyanatosilane used when synthesizing organosilicon compound IV, there are 3-isocyanatopropyltriethoxysilane, 3-isocyanatopropylmethyldiethoxysilane and the like.

The reaction between the isocyanatosilane and the reaction product of aforesaid compound B plus the polyfunctional amine, that is to say the reaction between the isocyanate and amino groups can be carried out by generally known methods.

As examples of the epoxysilane used when synthesizing organosilicon compound IV, there are compounds with at least one epoxy group, glycidyl group or alicyclic epoxy group and at least one hydrolysable silane group such as a chlorosilane group, alkoxysilane group or aminosilane group. Specific examples are 3,4-epoxybutyltrimethoxysilane, 2-(3,4-epoxycyclohexyl)ethyltrimethoxysilane, (3-glycidoxypropyl)trimethoxysilane, (3-glycidoxypropyl)methyldimethoxysilane, N-glycidyl-N,N-bis{3-(methyldimethoxysilyl)propyl)amine, N-glycidyl-N,N-bis{3-(trimethoxysilyl)propyl}amine and the like.

The reaction between the epoxysilane and the reaction product of the aforesaid compound B and the polyfunctional amine, that is to say the reaction between the epoxy groups and amino groups can be carried out by generally known methods.

Organosilicon compound IV is the reaction product of the compound B, the polyfunctional amine and the isocyanatosilane or epoxysilane, and there may also be used a mixture of isocyanatosilane and epoxysilane. Now, in relation to the hydrolysis properties, the aforesaid silane is preferably a trifunctional type in that the coated film strength is readily raised.

In the synthesis of organosilicon compound IV, since a polyfunctional amine is used, oligomer or polymer tends to be produced as by-product. Thus, it is preferred that, in each synthesis stage, purification such as distillation be carried out where required and separation of the target compound performed.

### 〈Organosilicon Compound V〉

An organosilicon compound which is the reaction product of aforesaid compound B and a polyfunctional isocyanate plus a hydroxysilane or aminosilane or carboxysilane, with the compound B and the hydroxysilane or aminosilane or carboxysilane being linked via the polyfunctional isocyanate.

As examples of the polyfunctional isocyanate used to synthesize organosilicon compound V, there are tolylene diisocyanate, diphenylmethane diisocyanate, xylylene diisocyanate, isophorone diisocyanate, hexamethylene diisocyanate and the like, but in order to reduce the production of by-product as far as possible, a bifunctional isocyanate is preferred. Of these, tolylene diisocyanate is preferred due to its low molecular weight, and the ease of purification and separation of by-products after reaction.

The reaction of a carbonyl group and isocyanate group is comparatively easy, and compound B and the polyfunctional isocyanate can be coupled by generally known methods. The following are examples of the reaction products which can be used in the synthesis of organosilicon compound V.

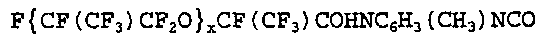

(In the formula, x is an integer of value at least 1 and is preferably in the range 2 to 120)

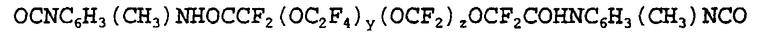

(In the formula, y and z are integers of value at least 1, and are preferably in the range 2 to 200.)

Examples of the hydroxysilane are compounds with at least one hydroxy group and at least one hydrolysable silane group such as a chlorosilane group, alkoxysilane group or aminosilane group. Specific examples are hydroxymethyltriethoxysilane, condensed oligomers thereof and the like.

Examples of the aminosilane are compounds with at least one amino group and at least one hydrolysable silane group such as a chlorosilane group, alkoxysilane group or aminosilane group. Specific examples are 4-aminobutyltriethoxysilane, n-(2-aminoethyl)-3-aminopropyltrimethoxysilane, aminophenyltrimethoxysilane and 3-aminopropyltriethoxysilane.

Again, examples of the carboxysilane are compounds with at least one carboxyl group and at least one hydrolysable silane group such as a chlorosilane group, alkoxysilane group or aminosilane group. Specific examples are carboxymethyltriethoxysilane and the like.

Now, in relation to their hydrolysis properties, the aforesaid silane is preferably a trifunctional type in that the coated film strength is readily raised.

Organosilicon compound V is the reaction product of compound B and a polyfunctional isocyanate plus a hydroxysilane or aminosilane or carboxysilane, and mixtures thereof can also be used. The organosilicon compound V is a compound wherein compound B and the hydroxysilane or aminosilane or carboxysilane are linked via a polyfunctional isocyanate. It is possible to synthesize the compound of the present invention either by first of all reacting compound B and the polyfunctional isocyanate to synthesize a terminal isocyanate compound, and then reacting the hydroxysilane or aminosilane or carboxysilane with the terminal isocyanate, or by the method of firstly reacting the polyfunctional isocyanate and the hydroxysilane or aminosilane or carboxysilane to produce a compound with a terminal isocyanate on one side, after which this is reacted with compound B. For both reactions, there can be used generally known methods.

Since a polyfunctional isocyanate is used, whichever aforesaid synthesis process is adopted oligomer or polymer tends to be produced as a by-product. Hence, it is preferred that in each synthesis stage, purification such as distillation be carried out where required and separation of the target compound performed.

### 〈Organosilicon Compound VI〉

An organosilicon compound in which aforesaid compound B and an isocyanatosilane are coupled.

As examples of the isocyanatosilane used for the synthesis of organosilicon compound VI, there are compounds having at least one isocyanate group and at least one hydrolysable silane group such as a chlorosilane group, alkoxysilane group or aminosilane group. Specific examples are 3-isocyanatopropyltriethoxysilane, 3-isocyanatopropylmethyldiethoxysilane and the like.

A generally known method can be used for the reaction between the carboxyl group of compound B and the isocyanate group of the isocyanatosilane.

### 〈Organosilicon Compound VII〉

An organosilicon compound which is characterized in that aforesaid compound B and an aminosilane are coupled.

As examples of the aminosilane used for synthesizing organosilicon compound VII, there are compounds having at least one amino group and at least one hydrolysable silane group such as a chlorosilane group, alkoxysilane group or aminosilane group. Specific examples are 4-aminobutyltriethoxysilane, n-(2-aminoethyl)-3-aminopropyltrimethoxysilane, aminophenyltrimethoxysilane, 3-aminopropyltriethoxysilane and the like. Now, in relation to the hydrolysis properties, the aforesaid silane is preferably a trifunctional type in that the coated film strength is readily raised.

With regard to the reaction between the carboxyl group of compound B and the amino group of the aminosilane, methods using a condensing agent such as dicyclohexylcarbodiimide or diisopropylcarbodiimide are generally well known.

These organosilicon compounds of the kind denoted by I to VII are extremely high viscosity liquids at normal temperature or have poor solvent solubility, so the conventional methods of impregnating a porous ceramic or metal sintered body or affixing onto a fibrous electroconductive material mass for evaporation are difficult. In the production method of the present invention, prior to the coating of the substrate by evaporation, it is preferred that the molecular weight of the organosilicon compound be raised by polycondensation of at least part thereof. By such polycondensation, the molecular weight of the organosilicon compound is raised and it becomes a solid, so that splashing at the time of heating can be prevented. Furthermore, by raising the molecular weight of the organosilicon compound, it becomes possible to thicken and raise the density of the coated film, the adhesion to the substrate and the surface hardness are raised and it is easier to obtain a coating with outstanding contaminant removal properties.

The polycondensation can be made to proceed by carrying out an ether-elimination reaction at 150EC or above as shown by the following equation.

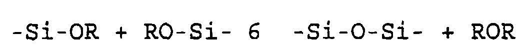

The polycondensation temperature is at least 150EC and preferably at least 180EC. Furthermore, it is also possible to conduct the reaction while removing the ether produced by heating under reduced pressure.

Again, the polycondensation reaction can be made to proceed at low temperature by reacting in two stages, comprising hydrolysis followed by a silanol group condensation reaction, as follows.

### (1) Hydrolysis

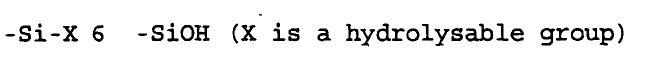

### (2) Condensation reactions

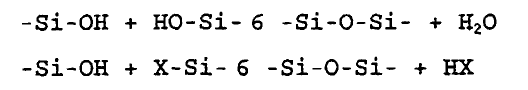

In order to promote the hydrolysis, it is preferred that there be added water, steam, hydrochloric acid, acetic acid, phosphoric acid, nitric acid or sulphuric acid, etc. or an aqueous solution thereof, as a hydrolysis accelerator. In the case where a fluorinated organosilicon compound is used, from the point of view of solubility the use of an acid which contains fluorine, such as trifluoroacetic acid or trifluoromethane-sulphonic acid, is preferred. At the time of the hydrolysis there is added, per equivalent of the hydrolysable groups, from 0.1 to 3.0 equivalents and preferably 0.3 to 1.0 equivalent of the hydrolysis accelerating agent. Where the amount added is less than 0.1 equivalent, hydrolysis is not readily promoted, while with more than 3.0 equivalents, there is a tendency for the hydrolysis and polycondensation to proceed too far so that the adhesion to the substrate is impaired. Again, in order to promote condensation reaction, there may be added a metal catalyst such as CuCl, CuCl₂, CuI, CuCN, CuBr.SMe₂, dibutyltin laurate, dibutyltin acetate, tin(I) oleate or a manganese salt, and also a tertiary amine such as triethylamine or triethylenediamine, or a metal alkoxide such as aluminium acetylacetonate. When carrying out the hydrolysis, a solvent may be used according to the circumstances. The solvent employed is not particularly restricted, and there can be used organic solvents such as alcohols, Cellosolves, ketones and ethers. Again, in the case where a fluorinated organosilicon compound is used, a fluorine-based solvent such as perfluorohexane, perfluorooctane or trifluoroxylene is used. The amount of solvent added is preferably such that the concentration of the organosilicon compound is from 10 wt% to 90 wt%. If the concentration exceeds 90 wt% then the viscosity is high and stirring becomes difficult, while with less than 10 wt% hydrolysis may be difficult to carry out.

The reaction conditions for the hydrolysis and condensation reaction in the present invention can be suitably varied depending on the type and amount of organosilicon compound used, and whether or not additives are present. Normally, the reaction temperature is from 10 to 200EC, and preferably from 15 to 150EC. Furthermore, the reaction time is normally in the range from 5 minutes to 40 minutes. In order to take the condensation reaction to completion, or in order to drive off the hydrolysis accelerator or solvent used, it is preferred that treatment be carried out at 60 to 150EC and, depending on the circumstances, it is also possible to conduct the heating treatment under reduced pressure.

It is also possible to have a molecular weight regulator present in the aforesaid polycondensation reaction. The molecular weight regulator is not particularly restricted, but an organosilicon compound having one hydrolysable group, as represented by (R^{á}) (R^{â}) (R^{ã})SiX (where R^{á}, R^{â} and R^{ã} are monovalent organic groups, and X is a hydrolysable group) is preferred.

In the present invention, the shape of the optical article is preferably planar or film shaped from the point of view of operational characteristics and uniformity when conducting the vapour deposition.

The present invention can be applied particularly preferably in the case of an optical article where an inorganic film such as an anti-reflective film, infra-red shielding film or electromagnetic wave shielding film is provided on a substrate, and then the organosilicon compound coated thereon. Here, reference to an inorganic film means a film comprising an inorganic substance such as gold, silver, aluminium or other such metal, silicon dioxide, titanium oxide, zirconium oxide, tin oxide, indium oxide, silicon carbide, titanium nitride or silicon nitride. The reason for this is because, where the surface is an inorganic film, adhesion between the evaporated organosilicon compound and the inorganic film on the surface of the optical article is readily enhanced. In the case where, in particular, the outermost layer of the inorganic film comprises silicon dioxide, it is possible to considerably raise the adhesion to the organosilicon and so this ideal. Such inorganic films can be formed either directly on the substrate or via a hard coat layer, by methods such as vacuum deposition, ion plating, sputtering, the sol-gel method and the like. Again, cleaning the surface of such an inorganic film and the modification of the surface properties by carrying out a treatment such as plasma discharge or corona discharge is also effective in enhancing the adhesion properties. As an anti-reflective film, there can be used a clear grade product with no surface irregularities and where reflection of outside light is prevented by a light interference action, or a non-glare grade product where irregularities are introduced in the surface and reflection of outside light is prevented by diffuse reflection.

As methods for coating the optical article of the present invention with the organosilicon compound layer, there can be used coating methods such as chemical vapour deposition (CVD) or physical vapour deposition (PVD) methods typified by vacuum deposition methods, ion plating methods, ion bean assist deposition methods and sputtering methods. In such methods, in order to improve the thermal conductivity at the time of the heating and evaporation of the condensation-polymerized organosilicon compound inside the vacuum tank, it is also possible to heat the organosilicon compound beforehand to improve its fluidity, and then to perform impregnation of or adhesion to a porous ceramic, metal sintered body or fibrous electroconductive material mass, after which the polycondensation is carried out.

The preferred film thickness of the organosilicon compound layer produced in this way at the surface of the optical article is at least 1 nm, and more preferably at least 5 nm. If the film thickness is less than 1 nm, there is a tendency for the properties such as contamination resistance, water repellency, oil repellency and electrical insulation to be impaired.

A more specific explanation of the invention is now provided by using examples but the invention is not to be restricted to these.

### Example 1

### (1) Method of preparing an anti-reflective film

Over about 400 cm² of both faces of a 2 mm thick PMMA substrate, there was applied an ethanol solution chiefly comprising silica sol (135 parts by weight), hydrolysate of ã-glycidoxypropyltriethoxysilane (129 parts by weight) and hydrolysate ofã-chloropropyltrimethoxysilane (70 parts by weight), and hardening performed, to form a hard coat layer of thickness about 3 ìm. On the hard coat layer, there was provided a multilayer anti-reflective film comprising, in turn, from the substrate side to the outside, SiO₂/ZrO₂/SiO₂/ZrO₂/SiO₂, by a vacuum deposition method, and an anti-reflective substrate obtained.

### (2) Organosilicon compound coating method

0.01 g of triethylamine (catalyst) was mixed with 15 mmol of HO-CH₂CF₂(OC₂F₄)ₚ(OCF₂)_{q}OCF₂CH₂-OH ("FOMBLIN Z DOL", Audimont K.K., number average molecular weight 4000; p/q = 1) and then 30 mmol of isocyanatopropyltriethoxysilane added dropwise under a nitrogen atmosphere at 80EC, after which reaction was carried out while refluxing and stirring for 8 hours, and an organosilicon compound obtained as colourless transparent viscous liquid. This organosilicon compound was treated for 8 hours at 180EC under reduced pressure and polycondensation effected, so that a solid material was obtained.

Using the solid material obtained as the evaporation source, vacuum deposition was carried out. The aforesaid anti-reflective substrate was set in a vacuum deposition device BMC-700 (produced by Shincron Co. Ltd.) and after reducing the pressure to 2.5 x 10⁻³ Pa, the evaporation source was heated on a tungsten boat by resistance heating, and an optical article comprising the aforesaid evaporation source coated onto the anti-reflective substrate obtained.

### (3) Functional evaluation

The optical article obtained was left to age for 24 hours under conditions of 23EC and 60% RH. Subsequently, the entire surface (the face provided with the layer of anti-reflective film) of the optical article to be measured was wiped, under an applied load of 250 g/cm², with a cleaning wipe soaked in methanol, then compressed air (about 0.1 MPa) blown thereon, and the excess methanol eliminated, and having removed the organosilicon compound not bonded to the substrate, the properties were evaluated by the following methods. The evaluation results are shown in Table 1.

### (a) Artificial fingerprint liquid contact angle

The measurement of the contact angle of the artificial fingerprint liquid at the optical article surface was carried out under conditions of 23EC and 60% RH using a FACECA-D model contact angle meter produced by the Kyowa Kaimen Kagaku Co. Ltd. After cutting the optical article to 3 cm x 7 cm, it was set on a sample stage. Using a syringe (diameter of the syringe needle about 0.7 mm), a drop of artificial fingerprint liquid of weight 5 mg was produced. The sample stage was then raised and the liquid drop brought into contact with the centre region of the optical article surface, so that the artificial fingerprint liquid drop was transferred to the optical article surface. The contact angle was measured within 30 seconds. 10 measurements were made with a fresh optical article prepared each time, and the average of the measured values was taken as the contact angle of the artificial fingerprint liquid at the surface of the optical article.

The artificial fingerprint liquid was prepared by dissolving 0.35 g of sodium chloride, 0.05 g of urea and 0.20 g of lactic acid in a mixture of 25 ml of pure water and 25 ml of ethanol.

### (b) Artificial fingerprint liquid sliding angle

The measurement of the sliding angle of the artificial fingerprint liquid at the surface of the optical article was carried out under conditions of 23EC and 60% RH using the sliding angle measurement unit for the FACECA-D produced by Kyowa Kaimen Kagaku K.K.. After cutting the optical article to 3 cm x 7 cm, it was set on a rotary stage. Using a syringe (diameter of the syringe needle about 0.7 mm), a drop of artificial fingerprint liquid of weight 10 mg was produced. The set optical article was raised and the liquid drop of artificial fingerprint liquid brought into contact with the centre region of the optical article surface, so that the artificial fingerprint liquid drop was transferred to the optical article surface. Firstly, the optical article was inclined in steps of 2E per second, and the sliding angle (taken as the predicted sliding angle) measured. Next, in the same way as above, a drop of artificial fingerprint liquid of weight 10 mg was transferred to the surface of the optical article, after which the optical article was inclined in steps of 2E per second but the inclination temporarily stopped before reaching the predicted sliding angle. Then, while inclining further in 0.1E steps, and waiting 10 seconds, the angle at which the droplet moved was taken as the sliding angle á of the artificial fingerprint liquid at the optical article surface (Figure 1). 10 measurements were made with a fresh optical article prepared each time, and the average of the measured values was taken as the sliding angle of the artificial fingerprint liquid at the surface of the optical article. Measurements were commenced within 30 seconds following the transfer of the artificial fingerprint liquid droplet to the surface, and the measurements were completed within 30 minutes.

### (c) Fingerprint wiping property

After pressing a finger on the surface of the optical article and leaving a fingerprint, the fingerprint was wiped away with tissue paper and evaluation carried out by the following criteria.

### Assessment Criteria

- O: : wiped clean in three backwards and forwards wipes
- Ä: : wiped clean in 10 backwards and forwards wipes
- X: : traces of fingerprint remain after 10 backwards and forwards wipes

### (d) Steel wool hardness

Steel wool #0000 was formed into a bundle of about 1 cm and, with the steel wool fibre direction arranged transversely to the direction of rubbing of the surface of the optical article, the steel wool was moved backwards and forwards 10 times under a 250 g/cm² load, after which any scratches were noted by eye.

### Assessment criteria

- O: : no scratches
- Ä: : a few scratches
- X: : many scratches

### (e) Abrasion resistance

Using a cleaning cloth ("Haize Gauze NT-4"; produced by the Asahi Chemical Industry Co.), rubbing of the surface of the optical article was carried out 100 times backwards and forwards under a load of 2 kg/cm², after which any change in the film surface was noted by eye.

### Assessment criteria

- O: : no change
- Ä: : slight change
- X: : change in colour

### (f) Quality of appearance

If bumping of the evaporation source occurs at the time of vapour deposition, spot-shaped blobs (defects) are produced on the surface of the optical article. This was determined by eye.

### Assessment criteria

- O: : no blobs to be seen
- Ä: : one or more blobs to be seen within a 10 cm square
- X: : one blob to be seen within a 1 cm square

### Comparative Example 1

The organosilicon compound was coated into the anti-reflective substrate in the same way as in Example 1, except that the synthesized organosilicon compound in Example 1 was used as it was as the evaporation source, without polycondensation. Functional evaluation of the optical article obtained was carried out by the same methods as in Example 1. The evaluation results are shown in Table 1.

### Example 2

To a solution of 15 mmol of HOCH₂CH₂(OH)CH₂OCF₂(OC₂F₄)ₚ(OCF₂)_{q}OCF₂CH₂OCH₂CH(OH)CH₂-OH ("FOMBLIN Z TETRAOL", Audimont K.K., number average molecular weight 2000; p/q = 1) dissolved in 20 g of DMF, a mixture of 60 mmol of isocyanatopropyltriethoxysilane and 0.01 g of dibutyltin dilaurate (catalyst) was added dropwise under nitrogen at 80EC. After the solution had been stirred and reacted for 8 hours, the solvent was distilled off and a white viscous liquid organosilicon compound was obtained.

[Translator's note:
clearly, a type setting error had crept into the original Japanese text in the above passage so as to render it, at first sight, incomprehensible. However, logically and by reference to Example 1, the intended meaning of the passage is as given in this translation.]

This organosilicon compound was diluted with the same weight of perfluorohexane, then 0.17 equivalent of trifluoroacetic acid added and stirring carried out for 2 hours at room temperature, after which treatment was conducted for 2 hours at 130EC and a polycondensation reaction effected. The solid substance obtained was employed as the evaporation source.

The anti-reflective substrate was coated with an organosilicon compound by evaporation of this evaporation source by a resistance heating method in the same way as in Example 1. Functional evaluation of the optical article obtained was carried out in the same way as in Example 1. The evaluation results are shown in Table 1.

### Comparative Example 2

In Example 2 above, the coating of the anti-reflective substrate was carried out by the same method as in Example 1 except that the synthesized organosilicon compound was used as it was as the evaporation source, without polycondensation. Functional evaluation of the optical article obtained was carried out in the same way as in Example 1. The evaluation results are shown in Table 1.

### Comparative Example 3

Coating of the organosilicon compound onto the anti-reflective substrate was carried out by the same method as in Example 1 except that, as the evaporation source, there was used "Demnum Silane" produced by the Daikin Kogyo Co. Functional evaluation of the optical article obtained was carried out in the same way as in Example 1. The evaluation results are shown in Table 1.

### Comparative Example 4

Coating of the organosilicon compound onto the anti-reflective substrate was carried out by the same method as in Example 1 except that, as the evaporation source, there was used heptadecafluorodecyltrimethoxysilane. Functional evaluation of the optical article obtained was carried out in the same way as in Example 1. The evaluation results are shown in Table 1.

### Comparative Example 5

"Cytop CTL-102M" produced by the Asahi Glass Co. was diluted to 0.5 wt%, then the antireflective substrate prepared in Example 1 immersed in this solution and dip coating performed by raising the plate at a rate of 10 cm/minute, after which ageing was performed for 24 hours. Functional evaluation of the optical article obtained was carried out in the same way as in Example 1. The evaluation results are shown in Table 1.

### Comparative Example 6

Without performing any coating, the anti-reflective substrate prepared in Example 1 was subjected to functional evaluation by the same methods as in Example 1. The evaluation results are shown in Table 1.

**Table 1**

| | **Artificial Fingerprint Liquid Contact Angle** | **Artificial Fingerprint Liquid Sliding Angle** | **Fingerprint Wiping Property** | **Steel Wool Hardness** | **Abrasion Resistance** | **Quality of Appearance** |
|---|---|---|---|---|---|---|
| Example 1 | 69.6 | 26.6 | O | O | O | O |
| Example 2 | 65.6 | 25.3 | O | O | O | O |
| Comp.Ex.1 | 66.9 | 35.6 | Ä | O | O | Ä |
| Comp.Ex.2 | 64.3 | 38.9 | Ä | O | O | X |
| Comp.Ex.3 | 64.0 | 38.0 | Ä | Ä | O | X |
| Comp.Ex.4 | 75.2 | 48.6 | X | O | O | X |
| Comp.Ex.5 | 58.6 | 28.3 | Ä | Ä | Ä | O |
| Comp.Ex.6 | 20.5 | 17.5 | X | O | O | O |

From the results in Table 1 it is clear that the surfaces of the optical articles in the Examples, which show an artificial fingerprint liquid contact angle of at least 60E and a sliding angle of no more than 30E, have an outstanding fingerprint wiping property. Furthermore, it is clear too that they are excellent in terms of steel wool hardness, abrasion resistance and quality of external appearance.

### Industrial Utilization Potential

By means of the optical articles of the present invention, it is possible to obtain optical articles to which contaminants do not readily adhere and which are outstanding in their contaminant removal property. Again, at the time of the coating of the optical article surface by evaporation of an organosilicon compound within a vacuum tank, by subjecting the organosilicon compound to polycondensation beforehand it is possible to obtain an optical article which is outstanding in its steel wool hardness, abrasion resistance and quality of external appearance.

The optical articles of the present invention can be used favourably for various types of display image screen, various types of display device display screen, optical filters, spectacle lenses, optical lenses, lighting appliances, exhibition cases or display windows, picture mounts, window glass and other such optical articles, or optical articles which are used attached thereto.

## Claims

1. Optical articles which are characterized in that they have an organosilicon compound layer at the surface, and the contact angle of artificial fingerprint liquid at said surface is at least 60E and, furthermore, the sliding angle of the artificial fingerprint liquid is no more than 30E.

2. Optical articles according to Claim 1 where the contact angle of the artificial fingerprint liquid at the optical article surface is at least 65E.

3. Optical articles according to Claim 1 where the organosilicon compound is a fluorinated organosilicon compound containing a perfluoroalkyl group or perfluoropolyether group.

4. Optical articles according to Claim 3 where the organosilicon compound is represented by the following general formula. 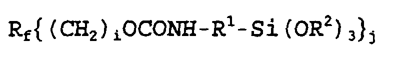 (In the formula, R_{f} is an organic group containing a fluorinated oxaalkyl group or fluorinated alkyl group, i is an integer in the range 1 to 4, R¹ is a bivalent organic group, R² is a monovalent organic group, and j is an integer in the range 1 to 4)

5. Optical articles according to Claim 4 where R_{f} includes a perfluoropolyether group comprising at least one selected from (CF₂CF₂CF₂O), (CF₂CF(CF₃)O), (CF₂CF₂O), (CF₂O) and (CF(CF₃)O).

6. Optical articles according to any of Claims 1 to 5 where the organosilicon compound at the optical article surface is subjected to polycondensation.

7. Optical articles according to Claim 1 which are characterized in that the organosilicon compound is coated onto a transparent substrate.

8. Optical articles according to Claim 1 which are characterized in that a hard coat layer is coated onto a transparent substrate and then the organosilicon compound coated on top thereof.

9. Optical articles according to Claim 1 which are characterized in that there is an inorganic film on a transparent substrate and then the organosilicon compound coated on top thereof.

10. Optical articles according to Claim 9 where the outermost layer of the inorganic film comprises silicon dioxide.

11. Optical articles according to Claim 9 or Claim 10 where there is provided a hard coat layer between the transparent substrate and the inorganic film.

12. A method of producing optical articles which is characterized in that, in a method in which an organosilicon compound is evaporated within a vacuum tank and coated onto the surface of an optical article, said organosilicon compound is subjected beforehand to polycondensation.

13. A method of producing optical articles according to Claim 12 where the organosilicon compound is a fluorinated organosilicon compound containing a perfluoroalkyl group or a perfluoropolyether group.

14. A method of producing optical articles according to Claim 13 where the organosilicon compound prior to the polycondensation is represented by the following general formula. 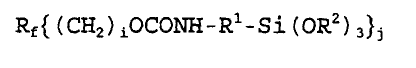 (In the formula, R_{f} is an organic group containing a fluorinated oxaalkyl group or fluorinated alkyl group, i is an integer in the range 1 to 4, R¹ is a bivalent organic group, R² is a monovalent organic group, and j is an integer in the range 1 to 4)

15. A method of producing optical articles according to any of Claims 12 to 14 where the number of silyl groups in the organosilicon compound prior to polycondensation is from 2 to 4 per molecule.

16. A method of producing optical articles according to Claim 12 where a PVD method or CVD method is used at the time of the coating of the organosilicon compound layer.

17. Organosilicon compounds represented by the following general formula. 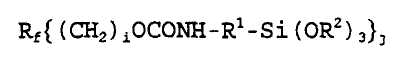 (In the formula, R_{f} is an organic group containing a fluorinated oxaalkyl group or fluorinated alkyl group, i is an integer in the range 1 to 4, R¹ is a bivalent organic group, R² is a monovalent organic group, and j is an integer in the range 1 to 4)

18. Organosilicon compounds according to Claim 17 where R_{f} includes a perfluoropolyether group comprising at least one selected from (CF₂CF₂CF₂O), (CF₂CF(CF₃)O), (CF₂CF₂O), (CF₂O) and (CF(CF₃)O).
